(19) Europäisches Patentamt

European Patent Office

Office européen des brevets

(11) **EP 1 385 677 B1**

(12) **FASCICULE DE BREVET EUROPEEN**

(45) Date de publication et mention
de la délivrance du brevet:
**25.10.2006 Bulletin 2006/43**

(21) Numéro de dépôt: **02738064.1**

(22) Date de dépôt: **10.05.2002**

(51) Int Cl.:
***B27K 3/15*** **(2006.01)**

(86) Numéro de dépôt international:
**PCT/EP2002/005237**

(87) Numéro de publication internationale:
**WO 2002/090067 (14.11.2002 Gazette 2002/46)**

(54) **PROCEDE DE TRAITEMENT D'UN MATERIAU POREUX**

VERFAHREN ZUR BEHANDLUNG EINES PORÖSEN MATERIALS

METHOD FOR TREATING A POROUS MATERIAL

(84) Etats contractants désignés:
**AT BE CH CY DE DK ES FI FR GB GR IE IT LI LU
MC NL PT SE TR**

(30) Priorité: **10.05.2001 EP 01111417**

(43) Date de publication de la demande:
**04.02.2004 Bulletin 2004/06**

(73) Titulaire: **UNIVERSITE CATHOLIQUE DE
LOUVAIN
1348 Louvain-la-Neuve (BE)**

(72) Inventeur: **TILQUIN, Bernard
B-1435 Mont-Saint-Guilbert (BE)**

(74) Mandataire: **Bird, Ariane et al
Bird Goën & Co
Klein Dalenstraat 42A
3020 Winksele (BE)**

(56) Documents cités:
**EP-A- 0 990 493         EP-A- 1 057 840**

**Description**

La présente invention concerne un procédé de traitement d'un matériau poreux à base de cellulose et/ou de lignine ainsi qu'un tel matériau présentant un facteur réduit d'imperméabilité à l'humidité. Plus particulièrement, la présente invention concerne un procédé d'imprégnation d'un matériau naturel tel que du bois permettant de réduire considérablement et durablement l'imperméabilité à l'humidité du matériau ainsi traité par rapport aux procédés de traitement déjà connus.

ETAT DE LA TECHNIQUE

Parmi les procédés de traitement de matériaux poreux à base de cellulose et/ou de lignine, on connaît déjà le "bois plastique" (brevets U.S. 3.077.417 à 3.077.420) obtenu par dégazage de bois sous vide, puis imprégnation du bois sous pression par le méthacrylate de méthyle jusqu'à saturation, mise sous azote du bois imprégné puis irradiation par une source de cobalt-60 ou césium-137 à une dose inférieure à 4 Mrads afin de polymériser le méthacrylate de méthyle. Ce procédé est lent, conduit à un produit lourd et dont la rétention d'eau (30% environ en poids) est trop élevée. Par ailleurs certaines substances contenues dans le bois, par exemple la quercétine, peuvent inhiber la polymérisation. Enfin l'imprégnation par le méthacrylate de méthyle ne permet pas d'obtenir une véritable stabilité dimensionnelle du matériau traité. Alternativement, l'emploi de faisceau d'électrons à une dose de 10 à 15 Mrads n'aboutit qu'à un durcissement très partiel (30 à 50%) du monomère. Le brevet GB 845.690 décrit une amélioration cinétique à ce procédé, consistant à mélanger le substrat cellulosique à un agent de gonflement hydrosoluble non polymérisable avant irradiation, puis à éliminer cet agent de gonflement après irradiation. Le but poursuivi est d'augmenter l'efficacité du greffage, défini par le fait que le polymère formé est lié chimiquement à la cellulose, et se trouve dans les interstices aussi bien qu'à la surface de la cellulose. Les exemples X et XI de ce brevet GB 845.690 décrivent l'irradiation, par passage dans un accélérateur Van de Graaff sous un faisceau d'éléctrons ayant une énergie de 2 Mev (soit une dose de 1,5 Mrad), d'un film de cellulose régénérée placé dans une cellule remplie de méthacrylate de glycidyle. Ici aussi, l'imprégnation s'effectue donc jusqu'à saturation du substrat cellulosique par le monomère.

La demande de brevet EP-A-990.493 décrit un procédé pour la préparation de combinaisons bois-matière plastique par lequel le bois est mis en contact avec un mélange d'imprégnation contenant des composants polymérisables pour l'imprégnation d'au moins une partie du bois, selon lequel le bois est saturé avec le mélange d'imprégnation et l'on effectue ensuite la polymérisation (durcissement) du mélange d'imprégnation en présence d'initiateurs de radicaux libres et/ou d'antioxydants par irradiation avec un accélérateur d'électrons à haute énergie avec des faisceaux d'électrons dont l'énergie va de 0,2 MeV à 15 MeV, caractérisé en ce que l'on entrepose ensuite le bois irradié pendant une durée de 5 heures à 10 jours à une température comprise entre 20°C et 100°C. Le mélange d'imprégnation peut en particulier comprendre du méthacrylate de glycidyle ou un (méth)acrylate polyfonctionnel tel que les di(méth)acrylates d'éthyleneglycol, de diéthyleneglycol, de triéthyleneglycol ou de tétraéthyleneglycol, le diméthacrylate de bisphenol-A, le tétra (méth)acrylate de pentaerythritol et le tri(meth)acrylate de triméthylolpropane. Les exemples de ce document illustrent la saturation du bois par un mode de réalisation consistant à placer le bois dans un bassin d'imprégnation à vide et pression, à établir un vide de 60 mbar pendant une demi-heure, à immerger le bois sous vide par le milieu d'imprégnation, puis à établir une pression d'azote de 5 bars pendant une heure avant irradiation. Ici encore, l'imprégnation s'effectue donc jusqu'à saturation du bois par le monomère. Il en résulte, comme dans les brevets cités en premier lieu ci-dessus, un procédé comportant de nombreuses étapes, long et compliqué, et par conséquent peu économique. Par ailleurs, le procédé d'imprégnation jusqu'à saturation implique l'utilisation de grandes quantités de monomères (donc une augmentation significative du poids du bois par unité de volume) et, pendant l'étape d'entreposage à chaud de la demande de brevet EP-A-990.493, l'évaporation dans l'air ambiant de monomères odorants et potentiellement toxiques, c'est-à-dire des nuisances écologiques.

La demande de brevet EP-A-1.057.840 décrit l'emploi, pour traiter un substrat cellulosique en améliorant sa résistance à la chaleur, d'un agent réticulable par faisceau d'électrons comprenant au moins 5% en poids d'un composant polymérisable à haut point d'ébullition (au moins 120°C) de formule (I) $CH=C(CHR_5OR_6)COOR_1$, dans laquelle chaque $R_1$ et $R_5$ est l'hydrogène ou un groupe alkyle, c'est-à-dire (selon la signification de $R_6$) un acide acrylique ou acrylate d'α-hydroxyalkyle ou d'α-polyéthylèneoxyalkyle. Dans cet agent réticulable par faisceau d'électrons, le composant (I) est mélangé avec de 5 à 50% en poids d'un autre composant polymérisable à haut point d'ébullition choisi notamment parmi des (méth)acrylates de composés polyépoxydés ayant un poids moléculaire d'au moins 900 et des polymères réticulables ayant un poids moléculaire supérieur à 1000 et pouvant être obtenus en polymérisant un ester de méthacrylate contenant un groupe époxy (tel que le méthacrylate de glycidyle). Il est clair, en fonction de la signification de $R_6$, que ni le composant (I) ni l'autre composant polymérisable ne peuvent être qualifiés de monomères de greffage ou de réticulation. Par ailleurs, bien que ce document spécifie que la tension d'accélération doit être au plus égale à 500 kV pour être efficace, il ne contient pas de détails concernant la méthode de mise en oeuvre de ces composants.

Un autre procédé de traitement, dit "plastique collé", consiste à revêtir le bois d'une couche primaire, puis d'une couche secondaire (à base de solvants) pour boucher les trous et enfin d'une couche de finition à base de monomères acryliques polymérisables par le rayonnement ultraviolet. L'inconvénient principal du procédé réside dans le délaminage rapide du revêtement, obligeant à une répétition fréquente du traitement. La polymérisation se faisant seulement en surface, il ne peut y avoir greffage sur les composants du bois. Une alternative à ce type de procédé consiste à revêtir le bois d'un polyuréthane qui forme un film plastique non greffé au bois et, pour cette raison, aisément pelliculable et présentant donc l'inconvénient de devoir être fréquemment re-appliqué au bois pour conserver la protection contre l'humidité.

Dans de nombreuses régions du monde, diverses essences de bois restent très appréciées et employées pour la construction de bâtiments ou de parties de bâtiments exposés à l'humidité de l'atmosphère ambiante, aux précipitations et/ou aux variations climatiques de toute nature, notamment aux effets du rayonnement solaire. Une protection durable contre ces facteurs naturels de dégradation du bois de construction constitue donc un enjeu économique de première grandeur. En particulier, le coût de l'entretien et/ou de la rénovation du bois naturel est principalement constitué de coûts de main d'oeuvre, et il est donc important que l'entretien puisse être espacé dans le temps, à efficacité comparable. Il existe donc un besoin pour un procédé de traitement du bois ou de matériaux poreux analogues dont l'efficacité soit d'une longévité assez grande pour que le traitement ne soit renouvelé qu'à intervalles de temps très espacés, de préférence une ou plusieurs dizaines d'années. Il existe aussi un besoin pour un procédé de traitement du bois ou de matériaux poreux analogues utilisant de plus faibles quantités de monomères coûteux, volatils, odorants et/ou potentiellement toxiques, c'est-à-dire un procédé écologique plus respectueux de l'environnement. Il existe aussi un besoin pour un procédé de traitement du bois ou de matériaux poreux analogues ne nécessitant qu'un nombre limité d'étapes, de préférence ne nécessitant pas les contraintes de temps et de post-traitement de l'art antérieur (par exemple l'entreposage à chaud prévu par la demande de brevet EP-A-990.493). Il existe aussi un besoin pour que la résistance du bois naturel à l'humidité puisse être améliorée sans augmenter significativement le poids du matériau par unité de volume, c'est-à-dire sans alourdir les structures de bâtiments utilisant le bois. Il est également désirable que le bois ainsi traité soit en outre protégé contre les facteurs biologiques de dégradation les plus divers tels que diverses sortes d'insectes et de champignons. D'autres besoins devant être simultanément rencontrés dans ce domaine de la technique sont d'une part l'absence d'aspect huileux ou collant au toucher du bois après traitement et d'autre part l'absence de modification durable des propriétés mécaniques et de la stabilité dimensionnelle du bois après traitement.

RESUME DE L'INVENTION

La présente invention est basée sur la constatation inattendue qu'une pièce de matériau poreux à base de cellulose et/ou de lignine tel que le bois peut être traitée de manière à la fois améliorée et durable contre l'humidité et d'autres facteurs naturels ou biologiques de dégradation par imprégnation dudit matériau poreux par au moins un monomère vinylique polymérisable par irradiation, puis irradiation du matériau poreux ainsi imprégné par une radiation ionisante à haute énergie, à la double condition que l'imprégnation soit effectuée dans des conditions propres à effectuer une imprégnation partielle et superficielle du matériau poreux, c'est-à-dire à limiter l'imprégnation du monomère dans une couche superficielle dont l'épaisseur est substantiellement inférieure à l'épaisseur de la pièce de matériau à traiter et que la quantité de monomère(s) d'imprégnation soit aussi limitée, de manière de préférence comprise entre 1 et 9% en poids environ, par rapport à la couche de matériau poreux concernée par ladite imprégnation.

La présente invention est aussi basée sur la constatation inattendue qu'un traitement écologique, amélioré et durable du bois contre l'humidité et d'autres facteurs naturels ou biologiques de dégradation peut être obtenu par un procédé de mise en oeuvre rapide et économique, comportant peu d'étapes et dont l'étape d'imprégnation par un ou plusieurs monomères vinyliques polymérisables par irradiation est effectuée sous une pression ne s'écartant pas substantiellement de la pression atmosphérique.

De la sorte il est possible, selon un autre aspect de la présente invention, d'obtenir un matériau poreux à base de cellulose et/ou de lignine tel que le bois comprenant, sur une épaisseur d'environ 0,1 à 5 mm, une couche superficielle faisant barrière à l'humidité (appelée ci-après film imperméable à l'humidité) comprenant un polymère greffé audit matériau poreux et/ou réticulé tel que le facteur d'imperméabilité à l'humidité dudit matériau ne dépasse pas 55 environ, ledit facteur étant défini comme le produit du taux pondéral (exprimé en pourcentage) de reprise d'humidité du matériau traité, après avoir été plongé dans l'eau à 20°C pendant 48 heures, par le taux pondéral (exprimé en pourcentage), relativement au matériau poreux, du ou des monomères constituant le polymère dudit film imperméable à l'humidité. Une valeur de 55 pour ce facteur signifie en clair, à titre d'exemple, qu'un taux de reprise d'humidité du bois de 11 % en poids (mesuré dans les conditions précitées) est obtenu par la présence d'au plus 5% en poids de monomère(s) par rapport au film polymère greffé au matériau poreux et/ou réticulé. Un tel matériau poreux protégé contre l'humidité et d'autres facteurs naturels ou biologiques de dégradation peut être avantageusement obtenu par imprégnation superficielle d'un ou plusieurs monomères polymérisables par irradiation dans les conditions détaillées ci-après.

Ainsi le procédé constituant le premier aspect de l'invention assure une reprise contrôlée d'humidité du matériau poreux traité en utilisant une quantité minimale de monomère d'imprégnation et en ne nécessitant pas de recours à des solvants organiques non polymérisables nuisibles à l'environnement, ni à un coûteux dispositif d'imprégnation à vide et pression comme dans la technologie dite du "bois plastique".

DESCRIPTION DETAILLEE DE L'INVENTION

Selon un premier aspect, la présente invention concerne un procédé de traitement d'une pièce de matériau poreux à base de cellulose et/ou de lignine tel que défini dans la revendication 1.

De préférence, l'étape d'imprégnation du procédé selon l'invention est mise en oeuvre sous une pression ne s'écartant pas substantiellement de la pression atmosphérique, c'est-à-dire ne s'écartant pas de celle-ci de plus de 10% environ en plus ou en moins. De préférence la pression est donc substantiellement constante pendant toute la durée du processus d'imprégnation. De la sorte, le procédé selon l'invention ne nécessite pas de dispositif de mise sous vide ou de mise sous pression ni de dispositif de mesure ou contrôle de la pression pendant l'étape d'imprégnation, d'où il résulte une simplification appréciable du procédé de traitement d'un matériau poreux contre l'humidité et d'autres facteurs naturels ou biologiques de dégradation sans pour autant nuire, bien au contraire, à l'efficacité dudit traitement.

Le procédé selon l'invention est particulièrement bien adapté au traitement de pièces de matériau poreux dont chaque dimension est au moins égale à environ 10 mm, quelque soit la forme géométrique de la pièce à traiter. En raison des caractéristiques de la radiation ionisante à haute énergie employée durant l'étape (b) du procédé et du caractère superficiel et partiel de l'imprégnation de monomère, la taille (de quelques centimètres à quelques mètres) et la forme (convexe, concave, linéaire, courbée, sphérique ou autre) de la pièce de matériau poreux à traiter peuvent être absolument quelconques.

De préférence, le procédé selon l'invention est mis en oeuvre en limitant l'imprégnation de monomère, sous la surface de la pièce de matériau poreux, à une couche dont l'épaisseur ne dépasse pas 20% environ et plus particulièrement pas 10% environ, de la plus petite dimension de ladite pièce.

Selon l'invention, on emploie un système d'imprégnation comprenant un ou plusieurs monomères de greffage et/ou un ou plusieurs monomères de réticulation, pourvu que leur imprégnation dans le matériau poreux soit contrôlée et limitée à une épaisseur de 0,1 à 5 mm, substantiellement inférieure à celle de la pièce du matériau à traiter et située immédiatement sous la surface de celui-ci en contact avec l'atmosphère extérieure. Tout monomère vinylique polymérisable par irradiation et possédant au moins une fonction capable de réagir avec les groupements hydroxyles de la cellulose et/ou de la lignine, c'est-à-dire capable de se greffer par liaisons covalentes avec le matériau poreux, est susceptible d'être utilisé dans le procédé selon l'invention. Sans constituer une limitation de la présente invention, une fonction chimique particulièrement efficace à cet égard est la fonction époxy. Par ailleurs, une fonction vinylique dont la vitesse de polymérisation par irradiation est particulièrement avantageuse est la fonction acrylique (ce terme incluant aussi la fonction méthacrylique). En conséquence, un monomère de greffage particulièrement avantageux pour l'imprégnation dans l'étape (a) du procédé selon l'invention est un monomère possédant à la fois une fonction acrylique et une fonction époxy, tel qu'un époxy-acrylate. Dans ce type de monomère, il est préféré que les fonctions acrylique et époxy soient suffisamment espacées l'une de l'autre, comme par exemple dans un acrylate ou méthacrylate d'époxyalkyle dont le groupement alkyle possède de 4 à 20 atomes de carbone. Il est aussi envisageable d'utiliser l'acrylate ou méthacrylate de glycidyle. Il est également préféré que la fonction époxy soit située en extrémité de chaîne de la molécule, pour une meilleure réactivité avec les groupements hydroxyles de la cellulose et/ou de la lignine. Il est également préféré que le poids moléculaire de l'époxy-acrylate ne dépasse pas 400 environ. Des exemples de monomères époxydés utilisables comprennent donc les acrylates et méthacrylates d'époxybutyle, d'époxyhexyle, d'époxyoctyle, d'époxynonyle, d'époxydécyle, d'époxydodécyle, d'époxyoctadécyle, etc. D'autres monomères de greffage utilisables dans le cadre de la présente invention peuvent aussi être dérivés d'un époxy-acrylate par ouverture d'une fonction époxy et formation consécutive d'une fonction hydroxy. D'autres monomères de greffage utilisables peuvent comporter plusieurs fonctions acrylique et plusieurs fonctions époxy ou dérivées d'époxy, toutefois leur complexité et leur coût supplémentaire ne sont pas compensés par des avantages particuliers vis-à-vis des monomères commercialement disponibles cités précédemment.

Les monomères de réticulation aptes à la mise en oeuvre du procédé selon l'invention sont bien connus de l'homme de l'art. Une fonction vinylique dont la vitesse de polymérisation par irradiation est particulièrement avantageuse étant une fonction acrylique ou similaire, un monomère de réticulation particulièrement avantageux pour l'imprégnation dans l'étape (a) du procédé selon la présente invention est un dérivé polyfonctionnel d'acide $\alpha,\beta$-éthyléniquement insaturé tel que l'acide acrylique, l'acide méthacrylique, l'acide crotonique, l'acide itaconique, l'acide maléique, l'acide fumarique, etc. De manière particulièrement préférée, ledit dérivé polyfonctionnel peut être un di-, tri- ou tétra-acrylate ou méthacrylate de polyol. Comme exemples non limitatifs de tels monomères de réticulation, on peut citer notamment les diacrylates et diméthacrylates de propanediol, de butanediol, d'hexanediol, d'octanediol, de nonanediol, de décanediol et d'eicosanediol, les diacrylates et diméthacrylates d'éthylèneglycol, de diéthylèneglycol, de triéthylèneglycol, de tetraéthylèneglycol, de polyéthylèneglycol et de néopentylglycol, les triacrylates et trimethacrylates de trimethylolpropane et de pentaerythritol, le tetraacrylate et le tetraméthacrylate de pentaerythritol, les diacrylates et diméthacrylates de bisphénol A et de bisphénol A éthoxylé, et les mélanges de ces monomères en toutes proportions.

Le(s) monomère(s) de greffage et/ou le(s) monomère(s) de réticulation peuvent être le cas échéant mélangés à un autre monomère n'ayant pas de capacité de greffage ou de réticulation, pour autant que la nature et la proportion de cet autre monomère dans ledit mélange n'altèrent pas la capacité de celui-ci à une imprégnation partielle et superficielle du matériau poreux à traiter. De préférence cet autre monomère est parfaitement miscible avec les monomère(s) de greffage et/ou de réticulation et, comme eux, est aisément polymérisable par irradiation par une radiation ionisante à haute énergie. Comme exemple d'un tel autre monomère on peut citer un mono-acrylate ou méthacrylate non ou peu réactif avec la fonction hydroxyle, pour autant que le mélange de ces monomères soit en proportions telles que la viscosité à 25°C du mélange soit de préférence comprise entre 10 et 3000 mPa.s environ et que la capacité de greffage et/ou réticulation sous irradiation ne soit pas affectée par la présence de cet autre monomère. En règle générale un tel autre monomère, par exemple un (méth)acrylate d'alkyle (comme les acrylates et méthacrylates de méthyle, d'éthyle, d'isopropyle, de butyle, de pentyle, de n-hexyle, de n-octyle, de n-décyle, de tetradecyle, etc.), sera employé en une proportion ne dépassant pas 30% environ en poids du mélange d'imprégnation, la proportion des monomère(s) de greffage et/ou de réticulation dans ce mélange étant donc au moins égale à 70% environ.

Plusieurs, en fait principalement quatre, paramètres de procédé permettent de définir des conditions d'imprégnation propres, isolément ou en combinaison, à limiter l'épaisseur de la couche d'imprégnation à une épaisseur de 0,1 à 5 mm, substantiellement inférieure à celle du matériau à traiter et située immédiatement sous la surface de celui-ci en contact avec l'atmosphère extérieure. Ces paramètres incluent:

- une température d'imprégnation comprise entre 10°C et 80°C environ, de préférence entre 20°C et 50°C environ,
- une durée d'imprégnation ne dépassant pas 90 minutes environ,
- un taux d'humidité du matériau poreux à traiter ne dépassant pas 12% environ en poids, mais de préférence non inférieur à 5% environ en poids (une telle humidité résiduelle ayant un effet favorable sur la mise en oeuvre du procédé), et
- une viscosité à 25°C du système d'imprégnation comprenant le monomère de greffage et/ou le monomère de réticulation (et, le cas échéant, l'autre monomère non réactif) comprise entre 10 et 3000 mPa.s environ.

A partir de ces indications générales, l'homme de métier est en mesure de déterminer par une expérimentation simple d'uné part les monomères ou mélanges de monomères répondant à la condition préférentielle de viscosité et d'autre part, en fonction du système d'imprégnation retenu et de sa viscosité, la combinaison adaptée des autres conditions (température et durée) d'imprégnation. Par exemple, la température d'imprégnation sera choisie d'autant plus élevée que la durée sera plus courte et/ou que la viscosité à 25°C sera plus élevée. Quant à la condition d'humidité du matériau poreux, elle signifie que l'efficacité du procédé selon l'invention ne peut être pleinement garantie lorsque le taux d'humidité du matériau poreux à traiter dépasse 12% en poids environ et, en conséquence, qu'il est souhaitable de soumettre celui-ci à une étape préalable de séchage pour abaisser son taux d'humidité au moins jusqu'à cette valeur avant de commencer le traitement selon l'invention. A l'inverse, cette étape préalable de séchage ne devra pas, pour une efficacité optimale du procédé selon l'invention, assécher le matériau poreux jusqu'à un taux résiduel d'humidité inférieur à 5% en poids environ car, sans vouloir être lié par cette théorie, l'eau incluse dans le matériau à traiter paraît jouer un rôle favorable dans le propriétés du matériau après traitement. La quantité de monomère de greffage et/ou de monomère de réticulation employé pour l'imprégnation dépend largement des quatre conditions de procédé précitées. Pour une protection satisfaisante et durable du matériau poreux contre l'humidité et d'autres facteurs naturels ou biologiques de dégradation, il est habituellement suffisant que cette quantité soit comprise entre 1 et 9%, de préférence entre 2 et 6% environ, du poids de la partie du matériau poreux concerné par l'imprégnation. L'homme de l'art sera donc toujours à même, à partir des indications ci-dessus et en fonction des conditions économiques qui lui seront imposées, telles que le coût du monomère de greffage et/ou du monomère de réticulation, de choisir les conditions de procédé adaptées la réalisation du but visé.

Le procédé de traitement selon l'invention est applicable à tout matériau poreux à base de cellulose et/ou de lignine, tel que notamment un bois naturel ou reconstitué, appartenant à des espèces diverses de feuillus ou de conifères comme par exemple le pin sylvestre (*pinus sylvestris*), le peuplier (*populus sp)*, le bouleau (*betula sp*), l'épicéa (*picea abies*), le hêtre (*fagus sylvatica*), le douglas (*pseudotsuga douglasii*) et similaires. Comme on le conçoit aisément, s'agissant de matériaux naturels, la quantité de monomère de greffage et/ou de monomère de réticulation employé pour l'imprégnation peut varier d'une espèce à l'autre, tout en restant comprise dans la gamme indiquée précédemment. La forme de la pièce de matériau poreux à traiter ne constitue pas un paramètre critique de la présente invention et peut être de nature quelconque, à la seule condition qu'elle permette une imprégnation et une irradiation suffisamment uniformes. Concernant des pièces destinées à la construction de bâtiments, il pourra s'agir de planches, poutres, blocs et similaires. Concernant des pièces destinées à la décoration, il pourra s'agir de bancs, moulures, piliers et similaires, notamment ceux destinés à être exposés à l'extérieur. Afin que le procédé de traitement selon l'invention puisse consister en une imprégnation superficielle de la pièce de matériau poreux, il est évidemment souhaitable que chaque dimension de ladite pièce soit au moins égale à 10 mm environ.

Le procédé de traitement selon l'invention peut utiliser toute radiation ionisante à haute énergie capable de polymériser le monomère vinylique d'imprégnation, telle que le rayonnement gamma (par exemple par une source de cobalt-60) et le faisceau d'électrons accélérés ou d'ions lourds. De préférence l'énergie mise en jeu dans l'étape d'irradiation est comprise entre 1 MeV et 10 MeV environ. Une énergie inférieure à 1 MeV environ se révèle peu efficace, tandis qu'une énergie supérieure à 10 MeV environ s'accompagne d'une radioactivité induite. Pour que la cinétique de polymérisation soit toutefois suffisamment rapide et que par conséquent le procédé soit suffisamment efficace, il est toutefois souhaitable que l'énergie d'irradiation employée soit au moins égale à environ 20 KGy. Dans des conditions industrielles, l'énergie d'irradiation peut couramment atteindre 100 KGy environ. La durée d'irradiation va typiquement de 1 à quelques secondes. Les équipements capables de procurer une telle radiation ionisante à haute énergie sont bien connus dans l'état de la technique et incluent notamment des rhodotrons.

Il peut être avantageux, notamment afin de diminuer encore le taux pondéral (exprimé en pourcentage) de reprise d'humidité du matériau, de répéter au moins une fois le traitement selon l'invention sur le matériau déjà imprégné et irradié une première fois. Les conditions d'imprégnation et d'irradiation au cours de ce traitement ultérieur pourront être identiques ou différentes des conditions retenues au cours du premier traitement, tout en restant de préférence à l'intérieur des gammes de paramètres indiquées précédemment. Comme on le comprend aisément cette imprégnation ultérieure a pour effet d'augmenter le taux pondéral (exprimé en pourcentage) de(s) monomère(s) relativement au matériau poreux, même si la quantité de monomère(s) imprégné(s) au cours du traitement ultérieur est généralement très inférieure (de l'ordre du dixième à la moitié) à celle mise en jeu au cours du premier traitement. Pour cette raison, tout en diminuant le taux pondéral (exprimé en pourcentage) de reprise d'humidité du matériau, le traitement ultérieur n'a pas nécessairement pour conséquence de diminuer le facteur d'imperméabilité (FIH) du matériau traité.

Selon un second aspect, la présente invention concerne un matériau poreux à base de cellulose et/ou de lignine, tel que le bois, tel que défini dans la revendication 7. Le procédé de traitement de matériau poreux selon l'invention permet d'atteindre couramment des facteurs FIH très bas, c'est-à-dire (comme on le démontre ci-après dans certains exemples de réalisation de l'invention) des facteurs FIH de l'ordre de 25 environ pour un bois de l'espèce *Pinus sylvestris* et de l'ordre de 28 environ pour un bois de l'espèce *Populus sp.* A facteur FIH constant, il est évidemment souhaitable que le taux pondéral de reprise d'humidité du matériau, après avoir été plongé dans l'eau à 20°C pendant 48 heures, soit le plus faible possible, sans pour autant nécessiter des quantités de monomère(s) qui rendraient le procédé économiquement inintéressant. En pratique, il s'avère possible que le taux pondéral de reprise d'humidité du matériau traité, après avoir été plongé dans l'eau à 20°C pendant 48 heures, ne dépasse pas 14% environ lorsque le matériau poreux est un bois de l'espèce *Pinus sylvestris,* et respectivement 18% environ lorsque le matériau poreux est un bois de l'espèce *Populus sp.* Comme on le démontre ci-après dans certains exemples de réalisation de l'invention, le taux pondéral de reprise d'humidité, après avoir été plongé dans l'eau à 20°C pendant 48 heures, d'un bois de l'espèce *Pinus sylvestris* peut couramment atteindre environ 10% après une simple imprégnation et environ 9% après une double imprégnation. De même le taux pondéral de reprise d'humidité, après avoir été plongé dans l'eau à 20°C pendant 48 heures, d'un bois de l'espèce *Populus sp* peut couramment atteindre environ 11% après une simple imprégnation et environ 8% après une double imprégnation.

Le procédé de traitement et le matériau poreux traité selon l'invention offrent de très nombreux avantages :

- la résistance du matériau poreux (par exemple du bois naturel de diverses espèces) à l'humidité est considérablement et durablement améliorée sans augmenter significativement le poids du matériau par unité de volume, c'est-à-dire sans alourdir les structures (par exemple celles de bâtiments) utilisant le matériau ainsi traité.
- le matériau est en outre protégé, de manière prolongée dans le temps, contre des facteurs biologiques de dégradation très variés tels que diverses sortes d'insectes et de champignons.
- le matériau n'a pas, après traitement, d'aspect huileux ou collant au toucher déplaisant pour la manipulation ou le transport par les utilisateurs.
- on ne note pas de modification durable des propriétés mécaniques et/ou de la stabilité dimensionnelle du matériau après traitement.
- on ne note pas de phénomène de depelliculage du film polymère, comme dans le cas d'un même matériau traité par un revêtement de polyuréthane (technique dite "plastique collé " présentée ci-dessus dans le paragraphe relatif à l'état de la technique), en raison de la liaison chimique entre celui-ci et les fonctions hydroxyles du matériau poreux.
- le recours à un dispositif d'imprégnation à vide et pression n'est plus nécessaire.

Les exemples suivants sont donnés à titre purement illustratif de la présente invention et ne prétendent nullement limiter la portée de celle-ci.

EXEMPLES 1 à 33 - imprégnation de *Pinus sylvestris*

On utilise comme échantillons des planches de pin sylvestre *(Pinus sylvestris)* de dimensions 70 x 40 x 20 mm. Après séchage à l'air libre, les échantillons sont placés dans une chambre climatisée maintenue à la température de 20°C et à un taux d'humidité relative de 50% jusqu'à stabilisation de leur poids. Après deux semaines dans ces conditions de préparation, le taux d'humidité d'équilibre du bois est de 10% environ. De manière à conduire l'expérience dans des conditions les plus proches possibles des conditions habituelles de mise en oeuvre et de façonnage de bois dans une structure, et à éviter que l'entrée du produit d'imprégnation par la face transversale de l'échantillon interfère, cette face transversale a été préalablement imperméabilisée de manière connue par application de plusieurs couches d'un vernis de polyuréthane. Le poids de l'échantillon ainsi préparé est noté.

Afin de suivre visuellement la distribution du monomère d'imprégnation (ou, le cas échéant, du mélange de monomères) au sein du bois, quelques milligrammes d'un colorant bleu "astra" ont été solubilisés dans chaque monomère. Directement à la sortie de la chambre climatisée, l'échantillon est imprégné pendant soixante minutes, à l'abri du rayonnement ultraviolet, par le monomère (ou le mélange de monomères soigneusement homogénéisé) choisi maintenu à la température de 22°C. On obtient ainsi, selon la viscosité du monomère à la température choisie, une imprégnation superficielle sur une épaisseur de l'ordre de 0,4 à 2 mm. Par une nouvelle mesure du poids de l'échantillon, le taux pondéral (exprimé en pourcentage) de monomère(s) imprégné(s) par rapport au bois est déterminé et noté $t_1$ dans le tableau 1 ci-après. Ensuite, la polymérisation du monomère (ou du mélange de monomères) est effectuée par exposition au rayonnement gamma (cobalt 60) de manière à recevoir une dose de 50 KGy. L'augmentation de température de l'échantillon pendant l'irradiation n'excède pas 5°C.

Après irradiation, l'échantillon est soumis à un test consistant à le plonger dans l'eau à 20°C pendant 48 heures puis à mesurer à nouveau son poids, de manière à calculer le taux pondéral (exprimé en pourcentage) de reprise d'humidité du bois. Ce taux est noté $t_2$ dans le tableau 1 ci-après. Enfin le facteur d'imperméabilité à l'humidité est calculé par la formule:

$$F.I.H = t_1 \times t_2$$

et reporté dans le tableau 1 ci-après.

Le monomère employé à l'exemple 1 est un monoacrylate époxydé. Aux exemples 2 à 5 sont employés des mélanges comprenant 2/3 (en poids) d'un monoacrylate commercialisé sous la dénomination Ebecryl 111 et 1/3 (en poids) d'un acrylate polyfonctionnel défini ci-après. Aux exemples 6 à 9 sont employés des mélanges comprenant 1/3 (en poids) du monomère Ebecryl 111 et 2/3 (en poids) d'un acrylate polyfonctionnel défini ci-après. Aux exemples 10 à 13 sont employés des mélanges comprenant 2/3 (en poids) d'un monoacrylate commercialisé sous la dénomination Ebecryl 112 et 1/3 (en poids) d'un acrylate polyfonctionnel défini ci-après. Aux exemples 14 à 17 sont employés des mélanges comprenant 1/3 (en poids) du monomère Ebecryl 112 et 2/3 (en poids) d'un acrylate polyfonctionnel défini ci-après. Aux exemples 18 à 25 sont employés des mélanges comprenant 2/3 (en poids) du monomère de l'exemple 1 et 1/3 (en poids) d'un acrylate défini ci-après. Aux exemples 26 à 33 sont employés des mélanges comprenant 1/3 (en poids) du monomère de l'exemple 1 et 2/3 (en poids) d'un acrylate défini ci-après.

L'acrylate polyfonctionnel utilisé aux exemples 2, 6, 10, 14, 19 et 27 est un acrylate tetrafonctionnel commercialisé sous la dénomination Ebecryl 80.

L'acrylate polyfonctionnel utilisé aux exemples 4, 8, 12, 16, 23 et 31 est un acrylate tetrafonctionnel commercialisé sous la dénomination Ebecryl 40.

L'acrylate utilisé aux exemples 3, 7, 11, 15, 22 et 30 est un triacrylate de triméthylolpropane éthoxylé commercialisé sous la dénomination Ebecryl 160.

L'acrylate polyfonctionnel utilisé aux exemples 5, 9, 13, 17, 24 et 32 est le triacrylate de triméthylolpropane.

L'acrylate utilisé aux exemples 20 et 28 est le monomère Ebecryl 111. L' acrylate utilisé aux exemples 21 et 29 est le monomère Ebecryl 112.

L'acrylate polyfonctionnel utilisé aux exemples 18 et 26 est le diacrylate de tripropyleneglycol. L' acrylate polyfonctionnel utilisé aux exemples 25 et 33 est le diacrylate de dipropyleneglycol.

Tous les monomères de dénomination Ebecryl sont commercialement disponibles auprès de la société UCB (Drogenbos, Belgique).

Tableau 1

| Exemple | $t_1$ | $t_2$ | F.I.H |
|---------|-------|-------|-------|
| 1 | 2,5 | 11,9 | 29,9 |

(suite)

| Exemple | $t_1$ | $t_2$ | F.I.H |
|---|---|---|---|
| 2 | 2,3 | 12,4 | 28,5 |
| 3 | 2,1 | 12,8 | 26,8 |
| 4 | 1,8 | 12,3 | 22,6 |
| 5 | 3,8 | 11,9 | 45,2 |
| 6 | 2,7 | 11,6 | 31,1 |
| 7 | 2,3 | 11,3 | 26,2 |
| 8 | 4,0 | 11,3 | 45,2 |
| 9 | 2,6 | 11,2 | 29,0 |
| 10 | 2,1 | 11,2 | 23,1 |
| 11 | 2,5 | 11,5 | 29,1 |
| 12 | 3,3 | 11,3 | 37,9 |
| 13 | 3,1 | 12,0 | 37,0 |
| 14 | 3,0 | 10,4 | 31,4 |
| 15 | 2,6 | 11,5 | 29,8 |
| 16 | 2,7 | 11,5 | 31,3 |
| 17 | 2,9 | 12,6 | 36,8 |
| 18 | 3,5 | 12,8 | 44,8 |
| 19 | 3,3 | 12,2 | 40,3 |
| 20 | 2,4 | 10,7 | 25,7 |
| 21 | 2,7 | 11,5 | 31,0 |
| 22 | 3,2 | 12,4 | 39,7 |
| 23 | 2,7 | 10,7 | 28,9 |
| 24 | 2,9 | 13,0 | 37,7 |
| 25 | 3,7 | 13,3 | 49,2 |
| 26 | 3,6 | 13,2 | 47,5 |
| 27 | 2,9 | 10,7 | 31,0 |
| 28 | 3,1 | 12,5 | 38,8 |
| 29 | 2,4 | 12,9 | 31,0 |
| 30 | 2,7 | 12,7 | 34,3 |
| 31 | 3,1 | 10,3 | 31,9 |
| 32 | 3,1 | 12,0 | 37,2 |
| 33 | 3,5 | 14,0 | 49,0 |

EXEMPLES 34 à 63 - imprégnation de *Populus sp*

Des échantillons de peuplier *(Populus sp)* sont préparés, imprégnés puis irradiés selon la méthode décrite aux exemples 1 à 33. Les taux pondéraux $t_1$ et $t_2$ ainsi que le facteur FIH sont reportés dans le tableau 2 ci-après.

Le monomère employé à l'exemple 34 est le monoacrylate époxydé de l'exemple 1. Le monomère employé à l'exemple 35 est une résine acrylée trifonctionnelle à base d'un dérivé de glycérol, commercialisée par la société UCB (Drogenbos, Belgique) sous la dénomination OTA 480. Les monomères employés aux exemples 36 à 39 sont des acrylates polyfonctionnels définis ci-après. Aux exemples 40 à 43 sont employés des mélanges comprenant 2/3 (en

**8**

poids) d'un monoacrylate commercialisé sous la dénomination Ebecryl 111 et 1/3 (en poids) d'un acrylate polyfonctionnel défini ci-après. Aux exemples 44 à 46 sont employés des mélanges comprenant 1/3 (en poids) du monomère Ebecryl 111 et 2/3 (en poids) d'un acrylate polyfonctionnel défini ci-après. Aux exemples 47 et 48 sont employés des mélanges comprenant 2/3 (en poids) d'un monoacrylate commercialisé sous la dénomination Ebecryl 112 et 1/3 (en poids) d'un acrylate polyfonctionnel défini ci-après. Aux exemples 48 à 51 sont employés des mélanges comprenant 1/3 (en poids) du monomère Ebecryl 112 et 2/3 (en poids) d'un acrylate polyfonctionnel défini ci-après. Aux exemples 52 à 57 sont employés des mélanges comprenant 2/3 (en poids) du monomère de l'exemple 1 et 1/3 (en poids) d'un acrylate défini ci-après. Aux exemples 58 à 63 sont employés des mélanges comprenant 1/3 (en poids) du monomère de l'exemple 1 et 2/3 (en poids) d'un acrylate défini ci-après.

L'acrylate polyfonctionnel utilisé aux exemples 40, 44, 47, 49, 53 et 59 est un acrylate tetrafonctionnel commercialisé sous la dénomination Ebecryl 80.

L'acrylate polyfonctionnel utilisé aux exemples 42, 46, 51 et 62 est un acrylate tetrafonctionnel commercialisé sous la dénomination Ebecryl 40.

L'acrylate utilisé aux exemples 41, 45, 48, 50, 55 et 61 est un triacrylate de triméthylolpropane éthoxylé commercialisé sous la dénomination Ebecryl 160.

L'acrylate polyfonctionnel utilisé aux exemples 43 et 56 est le triacrylate de triméthylolpropane. L'acrylate polyfonctionnel utilisé aux exemples 52 et 58 est le diacrylate de tripropyleneglycol. L'acrylate polyfonctionnel utilisé aux exemples 57 et 63 est le diacrylate de dipropyleneglycol.

L'acrylate utilisé à l'exemple 54 et est le monomère Ebecryl 111. L'acrylate utilisé à l'exemple 60 est le monomère Ebecryl 112.

Tableau 2

| Exemple | $t_1$ | $t_2$ | F.I.H |
|---------|-------|-------|-------|
| 34 | 3,0 | 18,0 | 54,0 |
| 35 | 4,5 | 11,6 | 52,2 |
| 36 | 5,0 | 10,4 | 52,0 |
| 37 | 4,1 | 9,5 | 39,0 |
| 38 | 4,8 | 10,8 | 51,8 |
| 39 | 4,3 | 12,8 | 55,0 |
| 40 | 2,5 | 14,9 | 37,2 |
| 41 | 2,2 | 13,6 | 29,9 |
| 42 | 2,0 | 12,9 | 25,8 |
| 43 | 3,6 | 14,7 | 52,9 |
| 44 | 2,1 | 11,7 | 24,6 |
| 45 | 4,0 | 13,6 | 54,4 |
| 46 | 3,0 | 12,9 | 38,7 |
| 47 | 2,8 | 11,2 | 31,4 |
| 48 | 3,6 | 12,0 | 43,2 |
| 49 | 3,9 | 10,7 | 41,7 |
| 50 | 3,2 | 11,7 | 37,4 |
| 51 | 3,7 | 11,7 | 43,3 |
| 52 | 2,8 | 15,0 | 42,0 |
| 53 | 3,2 | 14,6 | 25,7 |
| 54 | 2,3 | 17,3 | 31,0 |
| 55 | 3,2 | 12,1 | 39,7 |
| 56 | 2,7 | 12,0 | 28,9 |

(suite)

| Exemple | $t_1$ | $t_2$ | F.I.H |
|---|---|---|---|
| 57 | 3,3 | 15,1 | 37,7 |
| 58 | 3,0 | 15,6 | 46,8 |
| 59 | 3,9 | 13,6 | 53,0 |
| 60 | 2,0 | 14,1 | 28,2 |
| 61 | 2,7 | 11,4 | 30,8 |
| 62 | 3,0 | 11,7 | 35,1 |
| 63 | 3,7 | 13,3 | 49,2 |

EXEMPLES 64 à 71 - double imprégnation de *Pinus sylvestris*

Des échantillons de pin sylvestre sont préparés, imprégnés puis irradiés une première fois selon la méthode décrite aux exemples précédents. Après la première irradiation, ils sont à nouveau imprégnés par un monomère ou mélange de monomères puis irradiés dans les mêmes conditions que celles utilisées pour le premier traitement et déjà décrites. Pour la première imprégnation, on a utilisé un monomère ou mélange de monomères déjà utilisé dans l'un des exemples 1 à 33 et noté comme tel dans le tableau 3 ci-après. Pour la seconde imprégnation, on a utilisé un monomère ou mélange de monomères déjà utilisé dans l'un des exemples 1 à 63 et noté comme tel dans le tableau 3 ci-après. Les taux pondéraux $t_1$ (se rapportant à la somme des monomères imprégnés pendant la première et la seconde imprégnations) et $t_2$ ainsi que le facteur FIH sont reportés dans le tableau 3 ci-après.

Tableau 3

| Exemple | 1ere imprég | 2e imprégn. | $t_1$ | $t_2$ | FIH |
|---|---|---|---|---|---|
| 64 | Ex. 1 | Ex.1 | 4,0 | 10,8 | 43,2 |
| 65 | Ex.1 | Ex. 36 | 3,7 | 9,6 | 35,5 |
| 66 | Ex.1 | Ex. 38 | 3,9 | 9,8 | 38,2 |
| 67 | Ex. 32 | Ex. 32 | 3,8 | 9,2 | 35,0 |
| 68 | Ex. 24 | Ex. 24 | 3,9 | 10,4 | 40,6 |
| 69 | Ex. 27 | Ex. 27 | 4,9 | 9,0 | 44,1 |
| 70 | Ex.19 | Ex.19 | 3,7 | 10,1 | 37,4 |
| 71 | Ex. 27 | Ex. 1 | 5,0 | 9,7 | 48,5 |

EXEMPLES 72 à 79 - double imprégnation de *Populus sp*

Des échantillons de peuplier sont préparés, imprégnés puis irradiés à deux reprises dans les conditions des exemples 64 à 71. Les monomères utilisés pour la première et la seconde imprégnation, ainsi que les taux pondéraux $t_1$ (se rapportant à la somme des monomères imprégnés) et $t_2$ ainsi que le facteur FIH sont reportés dans le tableau 4 ci-après.

Tableau 4

| Exemple | 1 ere imprég | 2e imprégn. | $t_1$ | $t_2$ | FIH |
|---|---|---|---|---|---|
| 72 | Ex. 1 | Ex. 36 | 3,3 | 9,3 | 30,7 |
| 73 | Ex.1 | Ex. 38 | 2,7 | 11,6 | 31,3 |
| 74 | Ex. 32 | Ex. 32 | 3,5 | 8,7 | 30,5 |
| 75 | Ex. 24 | Ex. 24 | 2,7 | 10,2 | 27,5 |
| 76 | Ex. 27 | Ex. 27 | 4,5 | 8,1 | 36,8 |

(suite)

| Exemple | 1 ere imprég | 2e imprégn. | $t_1$ | $t_2$ | FIH |
|---|---|---|---|---|---|
| 77 | Ex. 19 | Ex. 19 | 4,2 | 10,3 | 43,3 |
| 78 | Ex. 27 | Ex.1 | 4,4 | 10,3 | 45,3 |
| 79 | Ex.19 | Ex.1 | 4,3 | 11,4 | 49,0 |

**Revendications**

1. Procédé de traitement d'une pièce de matériau poreux à base de cellulose et/ou de lignine comprenant :

   (a) l'imprégnation de la pièce de matériau poreux par un système d'imprégnation comprenant :

   - au moins un monomère de greffage possédant un groupement vinylique polymérisable par irradiation et au moins une fonction capable de réagir avec les groupements hydroxyles de la cellulose et/ou de la lignine, et/ou
   - au moins un monomère de réticulation ayant une fonction vinylique polymérisable par irradiation, puis

   (b) l'irradiation de la pièce de matériau poreux imprégné de monomère(s) par une radiation ionisante à haute énergie,

   procédé **caractérisé en ce que** l'imprégnation de la pièce de matériau poreux est effectuée dans des conditions propres à limiter l'imprégnation de monomère(s) dans une couche superficielle dont l'épaisseur ne dépasse pas 30 % de la plus petite dimension de la pièce de matériau à traiter et est comprise entre 0,1 et 5 mm, et **en ce que** la quantité de monomère(s) d'imprégnation est comprise entre 1 et 9% en poids de la couche de matériau poreux concernée par l'imprégnation.

2. Procédé de traitement selon la revendication 1, **caractérisé en ce que** l'imprégnation de la pièce de matériau poreux est effectuée essentiellement sous pression atmosphérique.

3. Procédé de traitement d'un matériau poreux selon l'une des revendications 1 et 2, **caractérisé en ce que** les conditions d'imprégnation de la pièce de matériau poreux propres à limiter l'épaisseur de la couche d'imprégnation incluent une température comprise entre 10°C et 80°C et/ou une durée ne dépassant pas 90 minutes et/ou un taux d'humidité du matériau poreux ne dépassant pas 12% et/ou une viscosité à 25°C du monomère d'imprégnation comprise entre 10 et 3000 mPa.s.

4. Procédé de traitement d'un matériau poreux selon l'une des revendications 1 à 3, **caractérisé en ce que** le matériau poreux est un bois.

5. Procédé de traitement d'un matériau poreux selon l'une des revendications 1 à 4, **caractérisé en ce que** la radiation ionisante à haute énergie est choisie parmi le rayonnement gamma et le faisceau d'électrons ou d'ions lourds.

6. Procédé de traitement d'un matériau poreux selon l'une des revendications 1 à 5, **caractérisé en ce que** l'énergie d'irradiation employée est comprise entre 20 kGy et 100 kGy.

7. Pièce de matériau poreux à base de cellulose et/ou de lignine comprenant, sur une épaisseur de 0,1 à 5 mm ne dépassant pas 30% de la plus petite dimension de la pièce, une couche superficielle faisant barrière à l'humidité d'un polymère greffé audit matériau poreux et/ou réticulé tel que le facteur d'imperméabilité à l'humidité du matériau ne dépasse pas 55, ledit facteur étant défini comme le produit du taux pondéral (exprimé en pourcentage) de reprise d'humidité du matériau après avoir été plongé dans l'eau à 20°C pendant 48 heures par le taux pondéral (exprimé en pourcentage), relativement au matériau poreux, du ou des monomères constituant le polymère de la couche superficielle faisant barrière à l'humidité, ladite pièce étant susceptible d'être obtenue par le procédé selon la revendication 1.

8. Pièce de matériau poreux selon la revendication 7, **caractérisée en ce que** ladite couche superficielle de polymère dérive d'un monomère de greffage possédant au moins une fonction capable de réagir avec les groupements hydroxyles de la cellulose et/ou de la lignine et/ou au moins un monomère de réticulation.

9. Pièce de matériau poreux selon la revendication 7 ou la revendication 8, **caractérisée en ce que** le taux pondéral de reprise d'humidité du matériau après avoir été plongé dans l'eau à 20°C pendant 48 heures ne dépasse pas 14% lorsque le matériau poreux est un bois de l'espèce *Pinus sylvestris.*

10. Pièce de matériau poreux selon la revendication 7 ou la revendication 8, **caractérisée en ce que** le taux pondéral de reprise d'humidité du matériau après avoir été plongé dans l'eau à 20°C pendant 48 heures ne dépasse pas 18% lorsque le matériau poreux est un bois de l'espèce *Populus sp.*

11. Procédé de traitement d'un matériau poreux selon l'une des revendications 1 à 6, **caractérisé en ce que** chaque dimension de la pièce à traiter est au moins égale à 10 mm.

12. Pièce selon l'une des revendications 7 à 10, **caractérisée en ce que** chaque dimension de ladite pièce est au moins égale à 10 mm.

**Claims**

1. Method for treating a piece of porous material based on cellulose and/or lignin, comprising:

   (a) impregnating the piece of porous material with an impregnating system comprising:

   - at least one grafting monomer having a vinylic group polymerisable by irradiation and at least one function capable of reacting with the hydroxyl groups of the cellulose and/or the lignin, and/or
   - at least one crosslinking monomer having a vinylic function polymerisable by irradiation, then

   (b) irradiating the piece of porous material impregnated with monomer(s) with high-energy ionising radiation,

   the method being **characterised in that** the impregnation of the piece of porous material is carried out under conditions suitable for limiting the impregnation of monomer(s) to a surface layer whose thickness does not exceed 30% of the smallest dimension of the piece of material to be treated and is between 0.1 and 5 mm, and **in that** the amount of impregnating monomer(s) is between 1 and 9% by weight of the layer of porous material affected by the impregnation.

2. Treatment method according to Claim 1, **characterised in that** the impregnation of the piece of porous material is carried out essentially under atmospheric pressure.

3. Method for treating a porous material according to either of Claims 1 and 2, **characterised in that** the conditions for impregnating the piece of porous material that are suitable for limiting the thickness of the impregnation layer include a temperature between 10°C and 80°C and/or a duration not exceeding 90 minutes and/or a moisture content of the porous material not exceeding 12% and/or a viscosity of the impregnating monomer at 25°C between 10 and 3000 mPa.s.

4. Method for treating a porous material according to one of Claims 1 to 3, **characterised in that** the porous material is wood.

5. Method for treating a porous material according to one of Claims 1 to 4, **characterised in that** the high-energy ionising radiation is chosen from gamma radiation, electron beam and heavy ion beam.

6. Method for treating a porous material according to one of Claims 1 to 5, **characterised in that** the radiation energy used is between 20 kGy and 100 kGy.

7. Piece of porous material based on cellulose and/or lignin comprising, over a thickness of 0.1 to 5 mm, not exceeding 30% of the smallest dimension of the piece, a moisture-impermeable surface layer of a polymer that is grafted to said porous material and/or crosslinked such that the moisture impermeability coefficient of the material does not exceed 55, said coefficient being defined as the product of the weight ratio (expressed in percentage) of moisture take-up of the material after it has been dipped into water at 20°C for 48 hours with the weight ratio (expressed in percentage), relative to the porous material, of the monomer(s) constituting the polymer of the moisture-impermeable surface layer, it being possible for said piece to be obtained by the method according to Claim 1.

8. Piece of porous material according to Claim 7, **characterised in that** said polymer surface layer derives from a grafting monomer having at least one function capable of reacting with the hydroxyl groups of cellulose and/or lignin and/or at least one crosslinking monomer.

9. Piece of porous material according to Claim 7 or Claim 8, **characterised in that** the weight ratio of moisture take-up of the material after it has been dipped into water at 20°C for 48 hours does not exceed 14% when the porous material is wood from the species *Pinus sylvestris.*

10. Piece of porous material according to Claim 7 or Claim 8, **characterised in that** the weight ratio of moisture take-up of the material after it has been dipped into water at 20°C for 48 hours does not exceed 18% when the porous material is wood from the species *Populus sp.*

11. Method for treating a porous material according to one of Claims 1 to 6, **characterised in that** each dimension of the piece to be treated is at least 10 mm.

12. Piece according to one of Claims 7 to 10, **characterised in that** each dimension of said piece is at least 10 mm.

**Patentansprüche**

1. Verfahren zur Behandlung eines auf Cellulose und/oder Lignin basierenden porösen Materialstücks, umfassend:

   (a) Imprägnieren des porösen Materialstücks mit einem Imprägniersystem, umfassend:

   - mindestens ein Pfropfmonomer, das eine durch Bestrahlen polymerisierbare Vinylgruppe und mindestens eine Funktion, die zur Reaktion mit den Hydroxylgruppen der Cellulose und/oder des Lignins in der Lage ist, aufweist, und/oder
   - mindestens ein Vernetzungsmonomer mit einer durch Bestrahlung polymerisierbaren Vinylfunktion, und dann

   (b) Bestrahlen des mit Monomer(en) imprägnierten porösen Materialstücks mit einer ionisierenden, hochenergetischen Strahlung,

   wobei das Verfahren **dadurch gekennzeichnet ist, dass** das Imprägnieren des porösen Materialstücks unter Bedingungen durchgeführt wird, die dazu ausgelegt sind, die Imprägnierung mit Monomer(en) auf eine oberflächliche Schicht zu begrenzen, deren Dicke 30% der kleinsten Dimension des zu behandelnden Materialstücks nicht überschreitet und 0,1 bis 5 mm beträgt, und **dadurch**, dass die Menge an Monomer(en) zur Imprägnierung 1 bis 9 Gew.-% der von der Imprägnierung betroffenen porösen Materialschicht beträgt.

2. Verfahren zur Behandlung nach Anspruch 1, **dadurch gekennzeichnet, dass** das Imprägnieren des porösen Materialstücks im Wesentlichen unter atmosphärischem Druck durchgeführt wird.

3. Verfahren zur Behandlung eines porösen Materials nach einem der Ansprüche 1 und 2, **dadurch gekennzeichnet, dass** die Imprägnierungsbedingungen für das poröse Materialstück, die dazu ausgelegt sind, die Dicke der Imprägnierschicht zu begrenzen, eine Temperatur von 10°C bis 80°C und/oder eine Dauer nicht über 90 min und/oder einen Feuchtigkeitsgehalt des porösen Materials nicht über 12% und eine Viskosität bei 25°C des Imprägnierungsmonomers von 10 bis 3000 mPa.s einschließen.

4. Verfahren zur Behandlung eines porösen Materials nach einem der Ansprüche 1 bis 3, **dadurch gekennzeichnet, dass** das poröse Material ein Holz ist.

5. Verfahren zur Behandlung eines porösen Materials nach einem der Ansprüche 1 bis 4, **dadurch gekennzeichnet, dass** die ionisierende, hochenergetische Strahlung aus gammaStrahlung und Strahlung aus Elektronen oder schweren Ionen ausgewählt ist.

6. Verfahren zur Behandlung eines porösen Materials nach einem der Ansprüche 1 bis 5, **dadurch gekennzeichnet, dass** die eingesetzte Bestrahlungsenergie 20 kGy bis 100 kGy beträgt.

7. Poröses Materialstück auf Cellulose- und/oder Ligninbasis, umfassend, auf einer Dicke von 0,1 bis 5 mm, die 30% der kleinsten Dimension des Stücks nicht überschreitet, eine Oberflächenschicht, die eine Feuchtigkeitsbarriere aus einem Polymer darstellt, das auf das poröse Material gepfropft und/oder damit vernetzt ist, derart, dass der Feuchtigkeits-Undurchlässigkeitsfaktor des Materials nicht über 55 liegt, wobei der Faktor definiert ist als das Produkt des Gewichtsgehalts (ausgedrückt in %) der Feuchtigkeitsaufnahme des Materials nach Eintauchen über 48 h in Wasser bei 20°C mit dem Gewichtsgehalt (ausgedrückt in %), in Relation zu dem porösem Material, des oder der Monomere, die das Polymer der Oberflächenschicht, welche die Feuchtigkeitsbarriere darstellt, aufbauen, wobei das Stück dazu geeignet ist, durch das Verfahren nach Anspruch 1 erhalten zu werden.

8. Poröses Materialstück nach Anspruch 7, **dadurch gekennzeichnet, dass** die oberflächliche Polymerschicht von einem Pfropfmonomer stammt, das mindestens eine Funktion, die in der Lage ist, mit den Hydroxylgruppen der Cellulose und/oder des Lignins zu reagieren, und/oder mindestens ein Vernetzungsmonomer aufweist.

9. Poröses Materialstück nach Anspruch 7 oder Anspruch 8, **dadurch gekennzeichnet, dass** der Gewichtsgehalt der Feuchtigkeitsaufnahme des Materials nach 48 h Eintauchen in Wasser bei 20°C 14% nicht überschreitet, wenn das poröse Material ein Holz der Art *Pinus sylvestris* ist.

10. Poröses Materialstück nach Anspruch 7 oder Anspruch 8, **dadurch gekennzeichnet, dass** der Gewichtsgehalt der Feuchtigkeitsaufnahme des Materials nach 48 h Eintauchen in Wasser bei 20°C 18% nicht überschreitet, wenn das poröse Material ein Holz der Art *Populus sp.* ist.

11. Verfahren zur Behandlung eines porösen Materials nach einem der Ansprüche 1 bis 6, **dadurch gekennzeichnet, dass** jede Dimension des zu behandelnden Stücks mindestens 10 mm entspricht.

12. Stück nach einem der Ansprüche 7 bis 10, **dadurch gekennzeichnet, dass** jede Dimension des Stücks mindestens 10 mm entspricht.